# EUROPEAN PATENT APPLICATION

(11) **EP 3 165 329 A1**
(43) Date of publication of application: **10.05.2017**
(21) Application number: 15815171.2
(22) Date of filing: 28.05.2015
(51) Int. Cl.: B24B 3/24, B23P 15/28

(54) **CUTTING TOOL PRODUCTION METHOD AND CUTTING TOOL**

(30) Priority: 01.07.2014 JP 2014135944
(71) Applicant: Kabushiki Kaisha Kobe Seiko Sho (Kobe Steel, Ltd.), Kobe-shi, Hyogo 651-8585 (JP)
(72) Inventor: NII, Hiroaki, Kobe-shi, Hyogo 651-2271 (JP); YAMAMOTO, Kenji, Kobe-shi, Hyogo 651-2271 (JP)
(74) Representative: TBK
(86) International application number: PCT/JP2015/065483
(87) International publication number: WO 2016/002402

(57) **Abstract**

A cutting tool production method according to the present invention has: a "rake face formation step" wherein a rake face is formed in a parent material that is the source of a cutting tool; a "flank face formation step" wherein a flank face is formed in the parent material that is the source of the cutting tool; a "chamfer formation step" wherein a chamfer is formed at a site where the formed flank face and rake face intersect; and an "R face formation step" wherein an R face is formed between the chamfer and the flank face. The production method also comprises an "R value calculation step" that is for calculating an R value that is the value of the radius of the R surface formed in the R face formation step.

## Description

### Technical Field

The present invention relates to a method for manufacturing a cutting tool, and a cutting tool manufactured by the method.

### Background Art

Conventionally, a cutting tool has been used for cutting a work material (such as a steel material). Specifically, shaving is performed by a lathe by using a cutting bite, or boring, drilling, milling, etc. is performed by using a drill, an end mill, etc.

There is a fear that the quality of a product manufactured in such a cutting work may deteriorate in accordance with the wear state of a cutting tool. For example, there is a fear that a tip portion (cutting edge) of a cutting tool may be broken due to friction with a work material, so as to degrade the dimensional accuracy of a machined surface. In addition, when the work material is subjected to a cutting work without knowing that the tip portion of the cutting tool is broken, an excessive load may be applied to the tip portion of the cutting tool. Thus, there is a fear that the cutting tool may be damaged due to an excessive load applied to the cutting tool as a whole.

In order to solve the aforementioned problem, there has been developed a technique for manufacturing a cutting tool, in which polishing for rounding a tip portion of the cutting tool (rounded face forming) is performed to thereby reduce friction with a work material. Such a technique for manufacturing a cutting tool having a rounded face formed in its tip portion is, for example, disclosed in Patent Literature 1 to Patent Literature 3.

Patent Literature 1 discloses a metal cutting tool in which one or plural teeth are provided, and each tooth has a tip, two side faces, a main cutting blade and two side blades. A rake face is formed in the tip, and each blade has a radius of the blade. In the metal cutting tool, the main cutting blade has a large radius, which has been made up by polishing. The side blade has a small radius, which has been made up by smooth grinding, which follows the above-described polishing, on at least a part of a side face of the side blade closest to the main cutting blade.

Patent Literature 2 discloses a method for manufacturing a drill head including an outer circumferential cutting blade, an intermediate cutting blade and a central cutting blade. Those blades are formed by brazing of cutting blade tips made of a sintered hard material. In the method for manufacturing the drill head, the cutting blade tip used for the outer circumferential cutting blade has a cutting margin on its outer edge side. The cutting blade tip is brazed in a cutting blade mounting seat of a head body portion. After that, a first stage of polishing is performed to polish and remove the outer edge side of the cutting blade tip linearly so as to set the position of the outer circumferential edge of the outer circumferential cutting blade. Next, a second stage of polishing is performed to polish and remove the outer end side of the outer circumferential cutting blade in an R-shape so as to form an R-shaped outer end portion in the cutting edge.

Patent Literature 3 discloses a method for forming a cutting blade of a rotary cutting tool. The rotary cutting tool includes a body and at least one flute. The flute defines a cutting blade adjacent to a cutting end of the rotary cutting tool. The flute is formed in the body so as to extend along at least a part of the whole length of the body. The method includes a step of emitting a laser beam to remove a material from the cutting end of the rotary cutting tool so as to form the cutting blade, and a predetermined three-dimensional curved face adjacent to the cutting blade.

### Citation List

### Patent Literatures

Patent Literature 1: JP-A-2000-334609
Patent Literature 2: JP-A-2011-245619
Patent Literature 3: JP-A-2013-508168

### Summary of the Invention

### Problem that the Invention is to Solve

However, there are problems as follows, in spite of use of the aforementioned techniques disclosed in Patent Literature 1 to Patent Literature 3. That is, in the technique in Patent Literature 1 and 2, though the cutting tool in which a predetermined rounded face is formed in a tip portion (cutting edge) or the manufacturing method thereof is disclosed, there is no consideration about the cutting conditions during cutting work, properties of the work material, etc. when the rounded face is formed. Accordingly, there is a fear that the cutting work cannot be performed well if there is a difference in the cutting conditions or the properties of the work material.

On the other hand, according to Patent Literature 3 disclosing a method for forming the shape of a cutting edge of a cutting tool by using a laser beam, the laser beam is emitted toward the cutting end of the rotary cutting tool at an angle θ including a component perpendicular to the plane where the cutting end is formed. Accordingly, it is difficult to machine a face that is hardly irradiated with the laser beam. In addition, according to Patent Literature 3 in which a laser beam being considered to be expensive is used, there is a fear that the manufacturing cost of the cutting tool may increase. Further, also in Patent Literature 3, there is no consideration about the cutting conditions during cutting work, properties of the work material, etc. when the rounded face is formed. Accordingly, there is a fear that the cutting work cannot be performed well if there is a difference in the cutting conditions or the properties of the work material.

From above, when a rounded face is formed in a cutting edge (chamfer) of a cutting tool such as a drill, it is necessary to calculate an R-value (a value of a radius of the rounded face) most suitable for the cutting tool itself in consideration of the cutting conditions, the properties of the work material, etc. That is, determining the most suitable R-value is one of important steps for manufacturing a long-life cutting tool. However, the techniques in Patent Literature 1 to Patent Literature 3 do not meet such a request.

In consideration of the foregoing problem, an object of the present invention is to provide a method for manufacturing a cutting tool, in which an R-value of a rounded face can be obtained simply and easily so that a most suitable rounded face can be formed between a chamfer and a flank face based on the obtained R-value.

### Means for Solving the Problem

In order to attain the foregoing object, the following technical steps are taken in the present invention.

A method for manufacturing a cutting tool according to the present invention includes a "rake face forming step" of forming a rake face in a substrate serving as a base of the cutting tool, a "flank face forming step" of forming a flank face in the substrate serving as the base of the cutting tool, and a "rounded face forming step" of forming a rounded face between the rake face and the flank face, and further includes an "R-value calculating step" of calculating an R-value which is a value of a radius of the rounded face to be formed in the rounded face forming step.

A method for manufacturing a cutting tool according to the present invention includes a "rake face forming step" of forming a rake face in a substrate serving as a base of the cutting tool, a "flank face forming step" of forming a flank face in the substrate serving as the base of the cutting tool, a "chamfer forming step" of forming a chamfer in a site in which the flank face formed and the rake face formed intersect each other, and a "rounded face forming step" of forming a rounded face between the chamfer and the flank face, and further includes an "R-value calculating step" of calculating an R-value which is a value of a radius of the rounded face to be formed in the rounded face forming step.

Preferably, in the R-value calculating step, the R-value may be calculated by performing a preliminary cutting test, and in the preliminary cutting test, a cutting tool in which the rounded face has not been formed yet may be used.

Preferably, in the rounded face forming step, the rounded face may be formed by using an injection lapping apparatus.

Preferably, a "film forming treatment step" of applying a surface treatment to the cutting tool may be provided after the rounded face forming step.

A cutting tool according to the present invention is manufactured by the aforementioned method for manufacturing a cutting tool.

### Advantage of the Invention

By a method for manufacturing a cutting tool according to the present invention, an R-value of a rounded face suitable to cutting conditions can be obtained simply and easily so that a most suitable rounded face can be formed between a chamfer and a flank face based on the R-value.

### Brief Description of the Drawings

[Fig. 1A] Fig. 1A is a front view schematically illustrating a drill.
[Fig. 1B] Fig. 1B is an enlarged view of a portion A in Fig. 1A.
[Fig. 1C] Fig. 1C is an enlarged view of a portion B in Fig. 1B.
[Fig. 2A] Fig. 2A is an enlarged view of a chamfer of a drill manufactured by a method for manufacturing a cutting tool according to the present invention, showing an enlarged view of the portion B in Fig. 1B before a rounded face is formed.
[Fig. 2B] Fig. 2B is an enlarged view of the chamfer of the drill manufactured by the method for manufacturing a cutting tool according to the present invention, showing an enlarged view of the portion B in Fig. 1B after the rounded face is formed.
[Fig. 3] Fig. 3 is a flow chart showing the method for manufacturing a cutting tool according to the present invention.
[Fig. 4] Fig. 4 is a graph showing the relationship between a cutting length by the cutting tool and a wear width.
[Fig. 5] Fig. 5 is a table showing test results of the present invention.

### Mode for Carrying Out the Invention

A method for manufacturing a cutting tool according to the present invention will be described below with reference to the drawings.

The embodiment which will be described below is an embodied example of the present invention. The embodied example is not to limit the configuration of the present invention. Therefore, the technical scope of the present invention is not limited only to the contents disclosed in the present embodiment. For example, the present embodiment will be described by using a drill that is a rotary cutting tool as an example among cutting tools 1. However, the drill is an example. The cutting tool 1 is not limited especially as long as it is a cutting tool (such as a cutting bite, milling tool, etc.) that can perform polishing or grinding on a work material.

In addition, the same references are used for the same components in the following description. Those components also have the same name and the same function. Accordingly, detailed description of them will not be repeated.

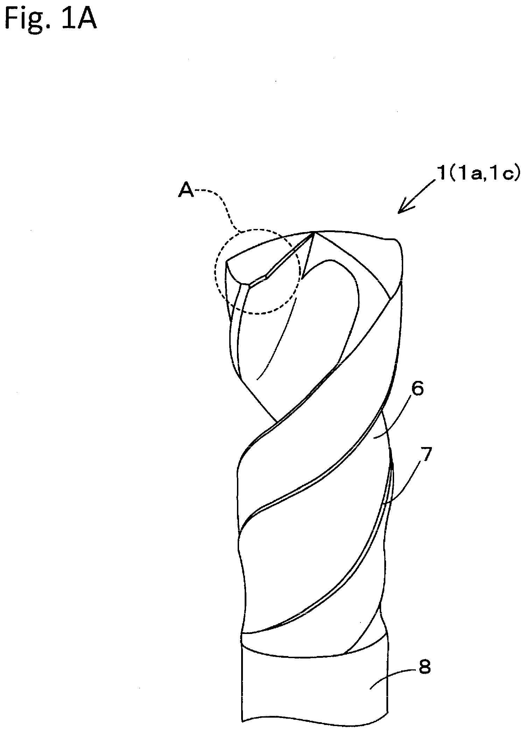

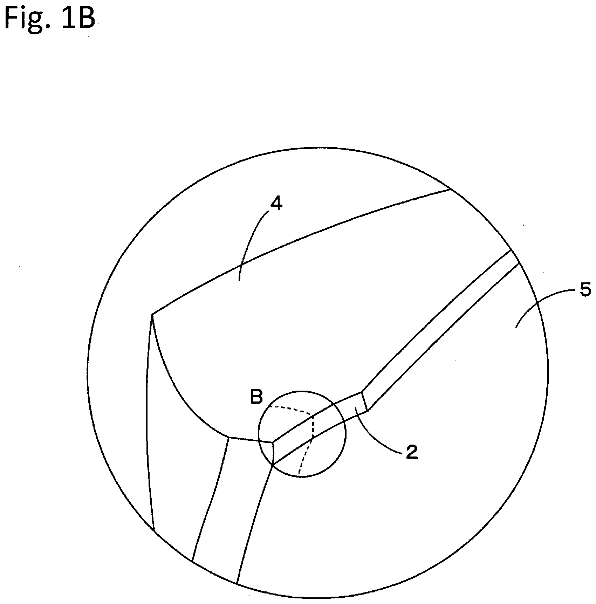

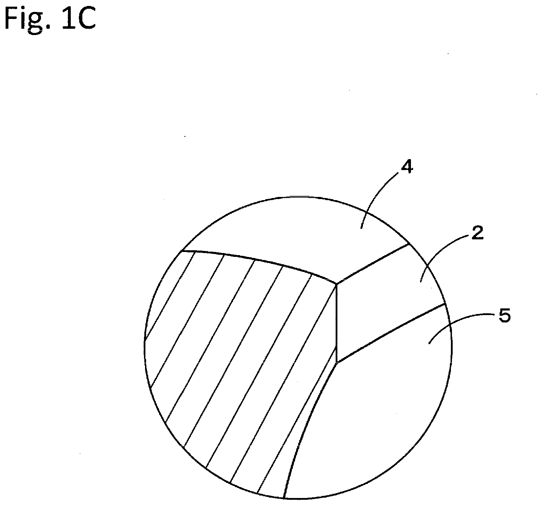

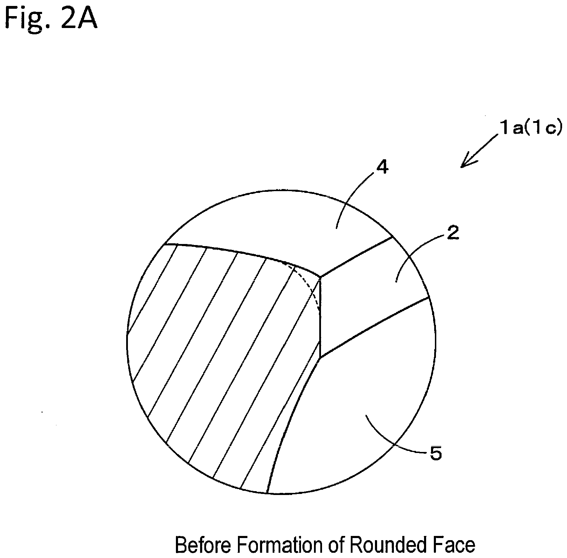

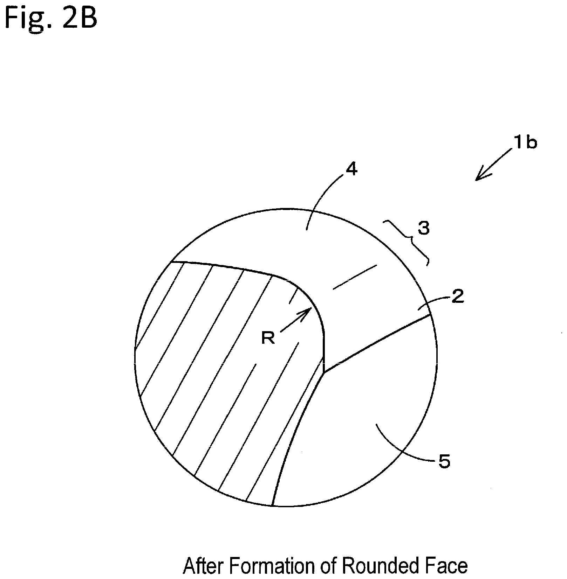

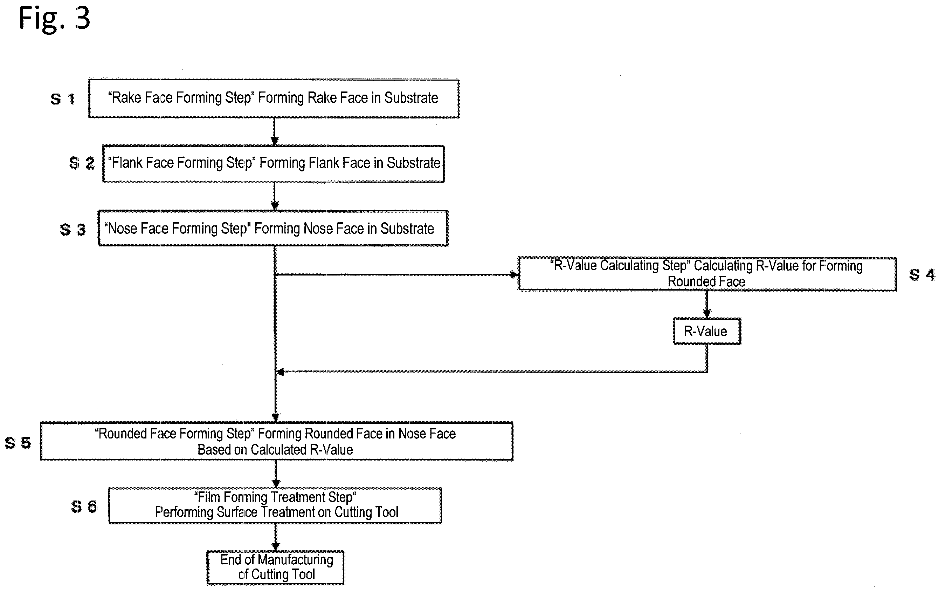

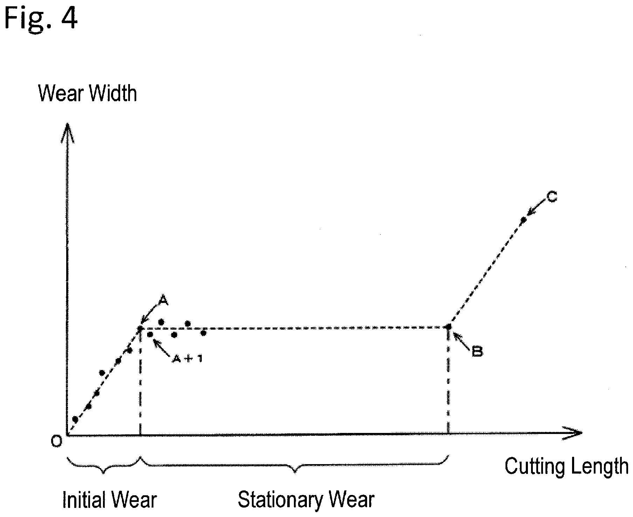

Fig. 1A is a front view schematically illustrating a drill. Fig. 1B is an enlarged view of a portion A in Fig. 1A. Fig. 1C is an enlarged view of a portion B in Fig. 1B. Fig. 2A is an enlarged view of a chamfer of a drill manufactured by a method for manufacturing a cutting tool according to the present invention, showing an enlarged view of the portion B in Fig. 1B before a rounded face is formed. Fig. 2B is an enlarged view of the portion B in Fig. 1B after the rounded face is formed. Fig. 3 is a flow chart showing the method for manufacturing a cutting tool 1 according to the present invention. Fig. 4 is a graph showing the relationship between a cutting length by the cutting tool 1 and a wear width (a result of a preliminary test).

The method for manufacturing the cutting tool 1 according to the present invention is a method in which a suitable rounded face 3 is formed in a cutting edge of the cutting tool 1 for performing cutting such as boring, drilling, milling, etc. on a work material, that is, a method for calculating a most suitable R-value between a chamfer 2 and a flank face 4.

As illustrated in Fig. 1A, in a drill 1 for cutting work, a cutting edge (cutting blade portion) for performing cutting on a work material is formed at a tip thereof, and a spiral groove portion 6 for discharging chips after performing the cutting to the outside is formed in the outer circumferential surface so as to extend from the tip to a halfway portion. In addition, margin portions 7 are formed in the opposite ends of the spiral groove 6, and a shank portion 8 which can be attached to a tool holder is formed so as to extend from the halfway portion of the drill 1 to a base end portion thereof.

In addition, a "rake face 5" (groove portion 6 at the tip) and a "flank face 4" are formed in the cutting edge (cutting blade portion) of the drill 1, and a "chamfer 2" is formed between the rake face 5 and the flank face 4 (see Fig. 1B and Fig. 1C).

The present invention relates to the method for manufacturing the cutting tool 1 as illustrated in Fig. 1 A. The method includes a "rake face forming step" of forming the rake face 5 in a substrate serving as a base of the drill 1 (cutting tool), a "flank face forming step" of forming the flank face 4 in the substrate serving as the base of the drill 1, a "chamfer forming step" of forming the chamfer 2 in a site in which the flank face 4 formed and the rake face 5 formed intersect each other, and a "rounded face forming step" of forming a rounded face 3 between the chamfer 2 and the flank face 4, further includes an "R-value calculating step" of calculating an R-value which is a value of a radius of the rounded face 3 to be formed in the rounded face forming step.

Further, a "film forming treatment step" of applying a surface treatment to the drill 1 is provided after the rounded face forming step.

In addition, in the "R-value calculating step", the R-value is calculated by performing a preliminary cutting test, and as a drill (cutting tool) used in the preliminary cutting test, a drill in which a rounded face has not been formed yet is prepared in advance and used.

The method for manufacturing the cutting tool 1 according to the present invention will be described below in detail with reference to the flow chart of Fig. 3.

In the following description of the present embodiment, a drill in which a rounded face has not been formed yet will be referred to as a base drill 1a, a drill in which the rounded face has been formed will be referred to as a machining drill 1b (drill according to the present invention), and a drill for use in a preliminary cutting test will be referred to as a preliminary cutting test drill 1c (or simply a test drill 1c).

As shown in Fig. 3, in the rake face forming step (S1), a spiral groove portion 6 having a predetermined torsion angle (for example, 30°), a predetermined depth, a predetermined length, etc. is formed in an axially (longitudinally) outer circumferential face of a columnar substrate serving as a base of the machining drill 1b. Thus, the face of the groove portion 6 formed in the tip of the substrate serves as the rake face 5.

Next, in the flank face forming step (S2), the tip of the substrate where the groove portion 6 has been formed is machined into a taper shape which is tapered with a predetermined angle (for example, a tip angle of 118°, 130° or the like). Thus, the tapered slope face formed in the tip of the substrate serves as the flank face 4.

In the chamfer forming step (S3), a flat face with a predetermined area, that is, the chamfer 2 is formed between the flank face 4 and the rake face 5 formed in the tip of the substrate. The chamfer 2 is a flat face which is extremely small to be able to be confirmed by an optical microscope.

As illustrated in Fig. 1A, after these three steps, the outline shape (the chamfer 2, the flank face 4, the rake face 5 (groove portion 6), the margin portions 7, etc.) of the base drill 1a is formed in the substrate (see Fig. 1B, Fig. 1C and Fig. 2A).

That is, the base drill 1a in which polishing has not been performed on the chamfer 2 yet, that is, in which a rounded face has not been formed yet, is manufactured thus.

Next, description will be made about the "rounded face forming step", by which the present invention is characterized and in which polishing is performed on an end portion of the chamfer 2, that is, in which the rounded face 3 is formed between the chamfer 2 and the flank face 4, and the "R-value calculating step" in which a target R-value required in the rounded face forming step is calculated.

To form the rounded face 3 between the chamfer 2 and the flank face 4, a target R-value (a radius of the rounded face 3) most suitable for the rounded face 3 is first calculated in the "R-value calculating step".

In the R-value calculating step (S4), a preliminary cutting test is performed by using a test drill 1c (a cutting tool 1 in which a rounded face has not been formed yet) prepared separately. In the preliminary cutting test, for example, one base drill 1a which has not been polished, not coated and not used for cutting is prepared for the preliminary cutting test to cut a work material under predetermined cutting conditions. It is desired that the work material and the cutting conditions in the preliminary cutting test are made the same as conditions that can be applied to machining drills 1b that will be manufactured in the following steps.

In the preliminary cutting test, the wear width (wear volume) of the test drill 1c is measured for every predetermined length of cutting, while an R-value formed between the chamfer 2 and the flank face 4 is measured. The R-value formed between the chamfer 2 and the flank face 4 may be measured, for example, by use of a three-dimensional shape measuring device.

Fig. 4 is a graph showing a result of the preliminary cutting test, that is, a summary of values (marks ●) of wear widths measured for every predetermined length of cutting. Fig. 4 shows the relationship between the cutting length and the wear width of the cutting tool 1 in the preliminary test.

As shown in Fig. 4, between when the preliminary cutting test starts and when the cutting length reaches the predetermined length (between the origin and a point A of measured value), the wear width increases as the cutting length is longer. After that, the cutting length increases while the wear width stands within a fixed range (between the point A and a point B of measured values). When the cutting length increases further, the wear width increases again to generate the possibility that the cutting tool 1 may be damaged (between the point B and a point C of measured values).

In the present embodiment, the period between the origin and the measured value point A, that is, the period when the wear width is increasing with increase in cutting length after the preliminary cutting test starts, is called an "initial wear". On the other hand, the period between the point A and the point B among measured values, that is, the period when the wear width stands within the fixed range in spite of increase in cutting length is called a "stationary wear".

Here, description will be made about a method for determining the "stationary wear".

As shown in Fig. 4, the wear width is measured for every predetermined cutting length (from the origin to, for example, a point A+5). Among the measured values, measured values standing within a fixed range without increasing in wear width in spite of increase in cutting length, for example, several points (from the point A to the point A+5) in and after a point (A+1) of measured value shown in Fig. 4 are extracted. There is no increase in wear width among the extracted data from the point A to the point A+5. Therefore, at least in and after the point (A+1), it can be determined that the "stationary wear" has already started.

Then a start point of the "stationary wear" is obtained. A point just before the measured value point (A+1) in which it is determined that the "stationary wear" has already started, that is, the point A is regarded as the start point of the "stationary wear".

From above, it is determined that the wear width between the point A and the point B of measured values is within the range of the "stationary wear", and it is determined that the wear width before the point A of measured value is "initial wear" (between the origin and the point A).

Based on the result of the wear width in the preliminary cutting test performed by using the test drill 1c (the R-value calculating step), the radius (R-value) of the rounded face 3 formed between the chamfer 2 and the flank face 4 during the stationary wear is calculated.

For example, from the measured values within the range of the stationary wear (between the point A and the point B), the point A of measured value is extracted, which corresponds to the start point of the stationary wear and has the wear width measured at the place where the cutting length value is the smallest. The radius of the rounded face 3 formed in the test drill 1c art the extracted point A is calculated, and the radius is set as the target R-value of the rounded face 3 to be formed in the machining drill 1b.

It is preferable that the R-value is obtained by using the measured value (point A) just after the stationary wear starts. However, the R-value may be obtained by using any measured value as long as it is within the stationary wear in which the wear width is substantially constant (for example, between the point A and the point A+5). When the R-value has been known, the processing of the aforementioned step S4 can be omitted.

As illustrated in Fig. 2B, which is an enlarged sectional view of the portion B, in the rounded face forming step (S5), based on the target R-value calculated in the R-value calculating step, the rounded face 3 to which the target R-value has been applied is formed between the chamfer 2 and the flank face 4 in the base drill 1a (manufactured from the aforementioned rake face forming step to the aforementioned chamfer forming step), the base drill 1a having been not polished and not coated yet and being manufactured separately from the test drill 1c.

Examples of a method for forming the rounded face 3 may include polishing by an injection lapping apparatus, polishing by brushing, polishing by machining, etc. Particularly, polishing by an injection lapping apparatus is desired. Examples of such injection lapping apparatus may include AEROLAP (registered trademark: mirror finishing machine made by Yamashita Works Co., Ltd.), SMAP (mirror shot machine made by Toyo Kenma Co., Lid.), etc. When such an injection lapping apparatus is used, the effect of reduction in friction on the flank face 4 and the rake face 5 can be also expected. In addition, when such an injection lapping apparatus is used, it is preferable that the injection position is adjusted so that injected polishing media can hit on the chamfer 2 (the part of the cutting blade).

Then the shape of the rounded face 3 polished by the injection lapping apparatus is measured. In detail, whether the shape of the polished rounded face 3, that is, the R-value of the machining drill 1b substantially coincides with the target R-value obtained in the R-value calculating step or not is measured by use of a three-dimensional shape measuring device.

The allowable range of the R-value of the polished machining drill 1b is set within a range of ±20% of the target R-value. More preferably, it may be set within a range of ±15% of the target R-value.

The reason why the allowable range of the R-value of the machining drill 1b is set as the above is because difficulty in cutting may generate chattering or vibration to easily cause a failure in a finished face when the value is higher than the target R-value by 20%. On the contrary, when the value is lower than the target R-value by 20%, stress may concentrate in the chamfer 2 (cutting edge).

In the film forming treatment step (S6), a surface treatment with hard coating is performed on the machining drill 1b in which the rounded face 3 has been formed between the chamfer 2 and the flank face 4. For example, the surface treatment is performed by using an AIP apparatus (Arc Ion Plating apparatus).

Through the aforementioned procedure, the target R-value can be obtained simply and easily, and the most suitable rounded face 3 can be formed between the chamfer 2 and the flank face 4 based on the obtained target R-value. It is therefore possible to manufacture the machining drill 1b (cutting tool) in which chattering or vibration can be prevented and whose life has been elongated. In addition, because the rounded face 3 with the target R-value has been formed, stress concentration in the coating can be reduced to further increase the cutting life.

### [Experimental Examples]

Next, experimental examples of the aforementioned method for manufacturing the cutting tool 1 according to the present invention will be described.

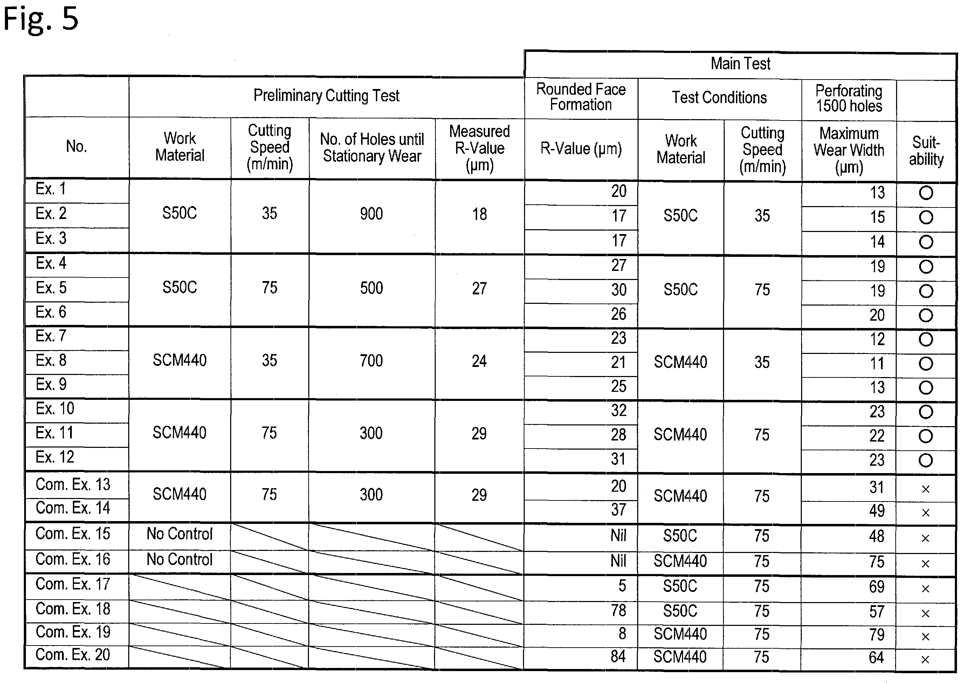

Fig. 5 is a table showing test results of the present invention.

As shown in Fig. 5, twelve machining drills 1b (Example 1 to Example 12) manufactured by the method for manufacturing the cutting tool 1 according to the present invention, and eight drills (Comparative Example 13 to Comparative Example 20) as Comparative Examples thereof were prepared.

In each of the present experimental examples, a preliminary cutting test (R-value calculating step) was first performed by using a test drill 1c. After that, a rounded face 3 was formed between a chamfer 2 and a flank face 4 of a base drill 1 a to form a machining drill 1b (rounded face forming step). A cutting test (main test) was performed for confirming the wear resistance of the machining drill 1b in which the rounded face 3 had been formed.

First, outlines of each test drill 1c (cutting tool which has not been used for machining yet), work materials, cutting conditions will be shown below. Assume that the test drill 1c in each of the experimental examples has a shape equivalent to that of the base drill 1a manufactured from the aforementioned rake face forming step to the aforementioned chamfer forming step.

### [Cutting Conditions (Preliminary Cutting Test)]

- work materials: S50C (carbon steel material for mechanical structure, JIS G 4051:2045) and SCM 440 (low-alloyed structural steel, JIS G 4053) (two kinds of steel materials)
- plate thickness: 60 mm
- base drill: MultiDrill (registered trademark) made by Sumitomo Electric Hardmetal Corp., model: MDS085SG, diameter φ8.50 mm, material Al, non-coated
- cutting speed: 35 m/min and 75 m/min (two kinds of speeds)
- blade feed: 0.24 mm/REV
- hole depth: 23 mm (from tip of drill 1)
Under the aforementioned cutting conditions, a cutting test using each test drill 1c, that is, a preliminary cutting test (R-value calculating step) was performed.

In the preliminary cutting test in each of the present experimental examples, the wear width of the test drill 1c was measured by an optical microscope for every 100 holes (100 times of perforating), and the R-value of the rounded face 3 formed in the chamfer 2 (cutting edge) was measured by a three-dimensional shape measuring device.

Based on a measured value (for example, the point (A+1) in Fig. 4) in which the measured wear width was regarded as not fluctuating, that is, the wear width was regarded as constant, and a measured value (the point A in Fig. 4) just therebefore, the measured value (the point A in Fig. 4) just before the wear width was regarded as constant was set as a start point of stationary wear of the test drill 1c. The R-value at the start point was set as a target R-value of the rounded face 3 to be formed between the chamfer 2 and the flank face 4 of a machining drill 1b.

A method in which an image of the chamfer 2 was taken by use of an optical microscope and the wear width was obtained from the image was used as a method for measuring the wear width.

In detail, in each of the present experimental examples, the magnification of the optical microscope was set to 200 times, and an objective lens of the optical microscope was placed substantially in parallel with the flank face 4 near the chamfer 2 (cutting edge). An image of the flank face 4 (double edged) near the chamfer 2 (cutting edge) formed in the test drill 1c was taken, and maximum wear widths were measured from the image of the flank face 4. An average of the maximum wear widths was calculated, and the average value was set as wear width. Wear occurs not in the chamfer but in the flank face near the cutting blade.

In addition, a method in which an image in and near the chamfer 2 of the test drill 1c was taken by use of a three-dimensional surface shape measuring apparatus, and the R-value of the rounded face 3 formed between the chamfer 2 and the flank face 4 was measured from the image was used as a method for measuring the R-value.

The outline of the method for measuring the R-value in each of the present experimental examples will be shown below.

### [Method for Measuring R-value]

- observation apparatus: InfiniteFocus (full focus 3D surface shape measuring apparatus) made by Alicona
- measuring magnification: 20 times
- imaging position: to measure four places of the chamfer 2, the flank face 4, the rake face 5, and the margin portion 7 from a position parallel to the chamfer 2 of the test drill 2.
- measuring method: to display an average profile within a rectangular area including about 40 µm of the chamfer 2, and measure the R-value from an angle between the chamfer 2 (cutting edge) and the flank face 4. To obtain an average at two places of the chamfer 2 near the margin portion 7, and set the target R-value of the machining drill 1b from the obtained average value.

As shown in Fig. 5, the outline of the measured results of R-values in the preliminary cutting tests of the present experimental examples will be shown below.

### [Preliminary Cutting Tests]

### • Preliminary Cutting Test 1

work material: S50C
cutting speed: 35 m/min
number of holes until entering stationary wear: 900 holes
measured R-value (target R-value): 18 µm

### • Preliminary Cutting Test 2

work material: S50C
cutting speed: 75 m/min
number of holes until entering stationary wear: 500 holes
measured R-value (target R-value): 27 µm

### • Preliminary Cutting Test 3

work material: SCM440
cutting speed: 35 m/min
number of holes until entering stationary wear: 700 holes
measured R-value (target R-value): 24 µm

### • Preliminary Cutting Test 4

work material: SCM440
cutting speed: 75 m/min
number of holes until entering stationary wear: 300 holes
measured R-value (target R-value): 29 µm

Based on the target R-value, the rounded face 3 is formed between the chamfer 2 and the flank face 4 of the base drill 1a to machine it into the machining drill 1b (rounded face forming step). To form the rounded face 3 with the target R-value between the chamfer 2 and the flank face 4, an end portion of the chamfer 2 is polished for 30 seconds by the injection lapping apparatus, and the R-value of the rounded face 3 formed between the chamfer 2 and the flank face 4 is then measured by the three-dimensional surface shape measuring apparatus. Polishing the chamfer 2 and measuring the R-value after the polishing are repeated till the R-value of the rounded face 3 reaches the target R-value.

The outline of a method for forming the rounded face, which is used in the rounded face forming step in each of the present experimental examples, will be described below.

### [Rounded face Forming Method]

- injection lapping apparatus: AEROLAP (registered trademark) made by Yamashita Works Co., Ltd., model: YT-100
- media to be used: multi-cone (polishing material in which abrasive grains have been combined), roughness: #3000
- conveyor speed: 100 m/min
- rounded face forming conditions: to dispose the chamfer 2 in a direction perpendicular to a media injection port and in a position at a distance of 10 mm from the media injection port

Time spent for the aforementioned polishing step, that is, the rounded face forming step is summed up and applied to subsequent manufacturing of machining drills 1b.

Next, by the AIP apparatus, coating was applied to the surface of the machining drill 1b in which the rounded face 3 with an R-value corresponding to the target R-value had been formed (film forming treatment step).

The outline of film forming Conditions used in the film forming treatment step in each of the present experimental examples will be described bellow.

### [Film Forming Conditions]

- film forming treatment apparatus: arc ion plating apparatus made by Kobe Steel Ltd., (model) AIP-SS002
- target to be used: Ti50A150, one sheet
- film formation time: 30 minutes
- arc current: 150 A
- bias voltage: -30 V

Then, a cutting test (main test) was performed on the machining drill 1b subjected to the surface treatment.

The cutting test for confirming the wear resistance of the machining drill 1b will be described with reference to Fig. 5.

Example 1 to Example 12 in Fig. 5 are machining drills 1b manufactured by the method for manufacturing the cutting tool 1 according to the present invention.

On the other hand, Comparative Example 13 and Comparative Example 14 in Fig. 5 are also machining drills 1b manufactured by the method for manufacturing the cutting tool 1 according to the present invention. However, coating was applied thereto with an intentional change in R-value of the rounded face 3 (a large difference from the target R-value) for the sake of comparison.

In addition, Comparative Example 15 and Comparative Example 16 in Fig. 5 are drills in each of which the rounded face 3 was not formed between the chamfer 2 and the flank face 4, that is, drills which had almost the same shape as the base drill 1a. Comparative Example 17 to Comparative Example 20 in Fig. 5 are drills each having the rounded face 3 formed between the chamfer 2 and the flank face 4 based on an R-value set arbitrarily.

The outline of cutting conditions in the cutting tests of the machining drills 1b and the drills to be compared therewith will be shown below.

### [Cutting Conditions (Wear Resistance Confirmation)]

- work materials: S50C and SCM440 (two kinds of steel materials)
- plate thickness: 60 mm
- drill: (serving as a base in Examples and Comparative Examples): MultiDrill (registered trademark) made by Sumitomo Electric Industries, Ltd., model: MDS085SG, diameter φ8.50 mm, material Al, non-coated
- cutting speed: 35 m/min and 75 m/min (two kinds of speeds)
- blade feed: 0.24 mm/REV
- hole depth: 23 mm (from tip of drill 1)
- evaluation condition: maximum exposed width (average of two rounded faces 3) of carbide in the flank face 4 of the drill 1 after perforating of 1,500 holes

In Example 1 in Fig. 5, the target R was set at 20 µm based on Cutting Preliminary Test 1, and the rounded face 3 was formed between the chamfer 2 and the flank face 4. Then, the cutting speed with the machining drill 1b in Example 1 was set at 35 m/min, and a cutting test was performed on the work material of S50C. The maximum wear width after perforating of 1,500 holes was small to be 13 µm. Thus, a good result was obtained (mark ○). Also in the machining drills 1b in Examples 2 and 3 in Fig. 5, the maximum wear widths were small to be 15 µm and 14 µm as results of cutting tests performed in the similar procedure as in Example 1. Thus, good results were obtained (marks ○).

In Example 4 in Fig. 5, the target R-value was set at 27 µm based on Cutting Preliminary Test 2, and the rounded face 3 was formed between the chamfer 2 and the flank face 4. Then, the cutting speed with the machining drill 1b in Example 4 was set at 75 m/min, and a cutting test was performed on the work material of S50C. The maximum wear width after perforating of 1,500 holes was small to be 19 µm. Thus, a good result was obtained (mark ○). Also in the machining drills 1b in Examples 5 and 6 in Fig. 5, the maximum wear widths were small to be 19 µm and 20 µm as results of cutting tests performed in the similar procedure as in Example 4. Thus, good results were obtained (marks ○).

In Example 7 in Fig. 5, the target R-value was set at 23 µm based on Cutting Preliminary Test 3, and the rounded face 3 was formed between the chamfer 2 and the flank face 4. Then, the cutting speed with the machining drill 1b in Example 7 was set at 35 m/min, and a cutting test was performed on the work material of SCM440. The maximum wear width after perforating of 1,500 holes was small to be 12 µm. Thus, a good result was obtained (mark ○). Also in the machining drills 1b in Examples 8 and 9 in Fig. 5, the maximum wear widths were small to be 11 µm and 13 µm as results of cutting tests performed in the similar procedure as in Example 7. Thus, good results were obtained (marks ○).

In Example 10 in Fig. 5, the target R-value was set at 32 µm based on Cutting Preliminary Test 4, and the rounded face 3 was formed between the chamfer 2 and the flank face 4. Then, the cutting speed with the machining drill 1b in Example 10 was set at 75 m/min, and a cutting test was performed on the work material of SCM440. The maximum wear width after perforating of 1,500 holes was small to be 23 µm. Thus, a good result was obtained (mark ○). Also in the machining drills 1b in Examples 11 and 12 in Fig. 5, the maximum wear widths were small to be 22 µm and 23 µm as results of cutting tests performed in the similar procedure as in Example 10. Thus, good results were obtained (marks ○).

On the other hand, in Comparative Example 13 in Fig. 5, the target R-value was set at 20 µm based on Cutting Preliminary Test 4, and the rounded face 3 was formed between the chamfer 2 and the flank face 4. Then, the cutting speed with the drill in Comparative Example 13 was set at 75 m/min, and a cutting test was performed on the work material of SCM440. The maximum wear width after perforating of 1,500 holes was large to be 31 µm. It was proved that the drill was not suitable for a use as a cutting tool (mark ×). Also in Comparative Example 14 in Fig. 5, a similar result to that in Comparative Example 13 was obtained. It was proved that the drill was not suitable for a use as a cutting tool (mark ×).

In Comparative Example 15 in Fig. 5, a cutting test was performed by using a drill in which the rounded face 3 was not formed between the chamfer 2 and the flank face 4. The maximum wear width after perforating of 1,500 holes was large to be 31 µm. It was proved that the drill was not suitable for a use as a cutting tool (mark ×). Also in Comparative Example 16 in Fig. 5, a similar result to that in Comparative Example 15 was obtained. It was proved that the drill was not suitable for a use as a cutting tool (mark ×).

In Comparative Example 17 in Fig. 5, a cutting test was performed by using a drill in which the rounded face 3 was formed based on an R-value (5 µm) set arbitrarily. The maximum wear width after perforating of 1,500 holes was large to be 48 µm. It was proved that the drill was not suitable for a use as a cutting tool (mark ×). Also in Comparative Example s 18 to 20 in Fig. 5, similar results to that in Comparative Example 17 were obtained. It was proved that the drills were not suitable for a use as cutting tools (marks ×).

From the aforementioned results, it has been proved that it will go well if the R-value of the rounded face 3 to be formed is set within a range of ±20% of the target R-value. It is more preferable that the R-value is set within a range of ±15% of the target R-value.

As has been described above, the rounded face 3 suitable for cutting can be formed in a machining drill 1b by performing a preliminary cutting test, with using a test drill 1c, for calculating a target R-value on the basis of which the rounded face 3 should be formed between the chamfer 2 and the flank face 4, and by setting a most suitable R-value based on the obtained target R-value. In the machining drill 1b manufactured thus, the maximum wear width is extremely small, and the life thereof is made long.

The present embodiment disclosed here should be considered as not restrictive but illustrative at any point.

For example, in the present embodiment, description has been made on the assumption that the rounded face 3 is formed between the chamfer 2 having a certain flat surface and the flank face 4. However, the present invention can be also applied to a shape in which the chamfer 2 has a sharply pointed shape like a pen point, and the rake face 5 and the flank face 4 are in direct contact with each other. That is, the rounded face 3 may be formed between the rake face 5 and the flank face 4.

In this case, the machining drill 1b may be formed as follows. That is, a base drill 1a is formed by performing a "rake face forming step" of forming a rake face 5 in a substrate as a base of a cutting tool 1, and a "flank face forming step" of forming a flank face 4 in the substrate as the base of the cutting tool 1. Based on an R-value of a rounded face 3 calculated in an "R-value calculating step", the rounded face 3 is formed between the rake face 5 and the flank face 4 in the base drill 1 a in an "rounded face forming step".

As items not disclosed obviously in the present embodiment disclosed here, such as running conditions or operating conditions, various parameters, dimensions, weights and volumes of constituent components, etc., values easily estimated by those skilled ordinarily in the art are used without departing from the scope they can perform ordinarily.

The present application is based on a Japanese patent application filed on July 1, 2014 (Application No. 2014-135944), the contents thereof being incorporated herein by reference.

### Description of Reference Numerals and Signs

- 1: cutting tool (drill)
- 1a: base drill (before formation of rounded face)
- 1b: machining drill (after formation of rounded face)
- 1c: drill for preliminary cutting test
- 2: chamfer
- 3: rounded face
- 4: flank face
- 5: rake face

## Claims

1. A method for manufacturing a cutting tool, comprising:
a "rake face forming step" of forming a rake face in a substrate serving as a base of the cutting tool;
a "flank face forming step" of forming a flank face in the substrate serving as the base of the cutting tool; and
a "rounded face forming step" of forming a rounded face between the rake face and the flank face,
and further comprising an "R-value calculating step" of calculating an R-value which is a value of a radius of the rounded face to be formed in the rounded face forming step.

2. A method for manufacturing a cutting tool, comprising:
a "rake face forming step" of forming a rake face in a substrate serving as a base of the cutting tool;
a "flank face forming step" of forming a flank face in the substrate serving as the base of the cutting tool;
a "chamfer forming step" of forming a chamfer in a site in which the flank face formed and the rake face formed intersect each other; and
a "rounded face forming step" of forming a rounded face between the chamfer and the flank face,
and further comprising an "R-value calculating step" of calculating an R-value which is a value of a radius of the rounded face to be formed in the rounded face forming step.

3. The method for manufacturing a cutting tool according to Claim 1 or 2,
wherein in the R-value calculating step, the R-value is calculated by performing a preliminary cutting test, and
wherein in the preliminary cutting test, a cutting tool in which the rounded face has not been formed yet is used.

4. The method for manufacturing a cutting tool according to Claim 1 or 2,
wherein, in the rounded face forming step, the rounded face is formed by using an injection lapping apparatus.

5. The method for manufacturing a cutting tool according to Claim 1 or 2, further comprising, after the rounded face forming step, a "film forming treatment step" of applying a surface treatment to the cutting tool.

6. The method for manufacturing a cutting tool according to Claim 3, further comprising, after the rounded face forming step, a "film forming treatment step" of applying a surface treatment to the cutting tool.

7. The method for manufacturing a cutting tool according to Claim 4, further comprising, after the rounded face forming step, a "film forming treatment step" of applying a surface treatment to the cutting tool.

8. The method for manufacturing a cutting tool according to Claim 5, further comprising, after the rounded face forming step, a "film forming treatment step" of applying a surface treatment to the cutting tool.

9. A cutting tool manufactured by the method for manufacturing a cutting tool according to Claim 1 or 2.

10. A cutting tool manufactured by the method for manufacturing a cutting tool according to Claim 3.

11. A cutting tool manufactured by the method for manufacturing a cutting tool according to Claim 4.

12. A cutting tool manufactured by the method for manufacturing a cutting tool according to Claim 5.

13. A cutting tool manufactured by the method for manufacturing a cutting tool according to Claim 6.

14. A cutting tool manufactured by the method for manufacturing a cutting tool according to Claim 7.

15. A cutting tool manufactured by the method for manufacturing a cutting tool according to Claim 8.
